# EUROPÄISCHE PATENTSCHRIFT

(11) **EP 3 939 746 B1**
(45) Veröffentlichungstag und Bekanntmachung des Hinweises auf die Patenterteilung: **23.08.2023**
(21) Anmeldenummer: 21193904.6
(22) Anmeldetag: 07.12.2018
(51) Int. Cl.: B25B 27/10, B21D 37/04, B21B 39/04

(54) **PRESSMASCHINE MIT SICHERUNGSELEMENT**
PRESS APPARATUS WITH FUSE
MACHINE À PRESSER POURVUE D'ÉLÉMENT DE SÉCURITÉ

(43) Veröffentlichungstag der Anmeldung: 19.01.2022
(62) Teilanmeldung aus: 18211095.7
(73) Patentinhaber: Emerson Professional Tools AG, 4450 Sissach (CH)
(72) Erfinder: RUCH, Matthias, 79588 Efringen-Kirchen (DE); KREUZER, Rudolf, 5033 Buchs (CH)
(74) Vertreter: Bardehle Pagenberg Partnerschaft mbB Patentanwälte Rechtsanwälte

(56) Entgegenhaltungen:
- EP-A1- 0 712 696
- EP-A1- 2 501 523
- EP-B1- 2 501 523
- GB-A- 1 559 966
- US-A- 5 040 400
- US-B2- 6 510 719

## Beschreibung

### 1. Technisches Gebiet

Die vorliegende Erfindung betrifft eine Pressmaschine gemäß dem Oberbegriff des Patentanspruchs 1, zum plastischen Verformen eines

Werkstücks mit einer Sicherungseinrichtung, die eine Betätigung der Pressmaschine nur erlaubt, wenn ein Werkzeugkopf korrekt in der Werkzeugaufnahme der Maschine eingesetzt ist. Eine derartige Pressmaschine geht beispielsweise aus der EP 0 712 696 A1 hervor.

Im Stand der Technik sind mehrere Verfahren zum Verbinden von rohrförmigen Werkstücken bekannt. Eine dieser Methoden setzt ein größeres Rohr über ein kleineres Rohr und verpresst beide miteinander. In anderen Methoden werden Rohre durch ein Verpressen von Pressfittings miteinander verbunden. Zur Ermöglichung der Verbindung werden handgeführte Pressmaschinen verwendet, die auch als Rohrpressmaschinen bezeichnet werden. Solche handgeführten Pressmaschinen verfügen über ein Presswerkzeug mit austauschbaren Werkzeugköpfen, die für verschiedene Verarbeitungsverfahren, wie z.B. zum Pressen, Crimpen oder auch zum Schneiden von Werkstücken, ausgetauscht werden können. Bei Pressmaschinen für Rohrverbindungen mithilfe eines Pressfittings umgeben die Pressbacken des Werkzeugkopfs den über dem Rohr angeordneten Pressfitting. Durch ein Schließen der Pressbacken werden der Pressfitting und das Rohr plastisch verformt und so dauerhaft miteinander verbunden.

Für gewöhnlich werden die Pressmaschinen von einem Elektromotor angetrieben und betätigen den Werkzeugkopf über einen Hydraulikkolben oder einen rein elektromechanischen Antrieb. Die Pressmaschinen weisen hierzu in beiden Fällen einen Elektromotor auf, der über das Stromnetz oder im Batteriebetrieb betrieben werden kann. Zur Erzeugung der erforderlichen hohen Kräfte wird zwischen Elektromotor und Werkzeugkopf üblicherweise eine elektrohydraulische oder elektromechanische Umwandlungseinrichtung angeordnet. Der Elektromotor erzeugt eine Drehbewegung, die durch beispielsweise ein mit dem Elektromotor verbundenes Getriebe reduziert wird. Die Abtriebswelle des Getriebes treibt wiederum beispielsweise einen Exzenter einer Exzenterwelle an. Bei einer hydraulischen Umwandlungseinrichtung wird durch den angetriebenen Exzenter ein Kolben einer Kolbenpumpe hin und her bewegt und damit eine Hydraulikflüssigkeit in einen Zylinderraum geleitet. Durch die von der Kolbenpumpe geförderte Hydraulikflüssigkeit wird ein Arbeitskolben innerhalb des mit Druck beaufschlagten Zylinders linear in Richtung des Werkzeugkopfs bewegt.

Aus der Druckschrift EP 2 501523 B1 ist ein handgeführtes Pressgerät zum Verpressen eines Pressfittings in der Installationstechnik und zum Verpressen von Kabelschuhen bekannt. Zur Erzeugung der erforderlichen hohen Presskräfte ist das Presswerkzeug mit einer elektrohydraulischen Umwandlungseinrichtung verbunden. Als Antriebsmotor wird ein bürstenbehafteter oder bürstenloser Elektromotor verwendet. Sobald die erforderliche Presskraft erreicht ist, öffnet ein mechanisches Überdruckventil und die Motordrehzahl steigt sprunghaft an. Dies wird von der Steuerung des Pressgeräts erkannt und der Elektromotor nachfolgend abgeschaltet. Dieses Gerät bietet somit eine Sicherungseinrichtung, die am Ende eines Pressvorgangs wirkt.

Aufgrund der hohen involvierten Kräfte ist es von großer Wichtigkeit, dass die Pressmaschine nur ausgelöst werden kann, wenn der auswechselbare Werkzeugkopf oder Pressbacke korrekt in der Werkzeugaufnahme der Pressmaschine eingesetzt ist. Ein nicht korrekt eingesetzter Werkzeugkopf kann bei Betätigung der Pressmaschine zu Beschädigungen an der Maschine oder dem Werkzeug führen und stellt zudem ein Sicherheitsrisiko für den Anwender dar.

Der Erfindung liegt daher die Aufgabe zu Grunde, eine Pressmaschine bereitzustellen, welche mit einem Sicherungselement versehen ist, um sicherzustellen, dass ein auswechselbarer Werkzeugkopf korrekt in der Werkzeugaufnahme der Maschine gehalten bzw. gesichert ist. In einem weiteren Aspekt soll die Erfindung ein Mittel bereitstellen, mit dem es möglich ist, ein Auslösen der Pressmaschine zu verhindern, solange es nicht sichergestellt ist, dass der Werkzeugkopf korrekt in der Werkzeugaufnahme angeordnet ist.

### 2. Zusammenfassung der Erfindung

Die oben genannten Probleme werden erfindungsgemäß durch eine Pressmaschine nach Anspruch 1 gelöst.

Insbesondere werden die oben genannten Probleme gelöst durch eine Pressmaschine zum plastischen Verformen eines Werkstücks, aufweisend ein Gehäuse und einen Elektromotor zur Betätigung der Pressmaschine, eine Werkzeugaufnahme, die am Gehäuse zur Aufnahme eines auswechselbaren Werkzeugkopfs eingerichtet ist und ein mechanisches Sicherungselement, welches von einer offenen Position, in der ein Werkzeugkopf in die Werkzeugaufnahme eingesetzt werden kann, in eine geschlossene Position, in der der Werkzeugkopf in der Werkzeugaufnahme gesichert ist, beweglich eingerichtet ist. Weiter umfasst die Pressmaschine ein mechanisches Betätigungselement, welches an der Pressmaschine zwischen einer ersten Position und einer zweiten Position beweglich eingerichtet ist, wobei das Betätigungselement derart eingerichtet ist, dass es mit dem mechanischen Sicherungselement interagieren kann, so dass das Sicherungselement in seiner geschlossenen Position das Betätigungselement in die zweite Position zwingt.

Die erfindungsgemäße Pressmaschine verfügt über einen elektrischen Antrieb und ist elektrohydraulisch betrieben. Typischerweise ist die Pressmaschine eine handgeführte Pressmaschine, das heißt, sie ist kein stationäres Werkzeug, sondern wird vom Anwender bei der Bearbeitung von Werkstücken in den Händen gehalten. Das eigentliche Werkzeug ist in Form eines auswechselbaren Werkzeugkopfs vorgesehen. Als Werkzeug kommen die üblicherweise für derartige Presswerkzeuge verwendeten Aufsätze infrage, wie insbesondere Pressbacken, CrimpWerkzeuge oder Schneid- und Stanzwerkzeuge. Das Vorsehen eines auswechselbaren Werkzeugkopfs macht die Pressmaschine universell anwendbar, da sie für die verschiedenen Anwendungszwecke mit jeweils geeigneten Werkzeugen versehen werden kann. Die Werkzeugaufnahme und der Werkzeugkopf sind daher vorzugsweise derart eingerichtet, dass ein schneller Wechsel des Werkzeugkopfs durch den Anwender an beispielsweise einer Baustelle möglich ist. Besonders bevorzugt ist der Werkzeugkopf so ausgebildet, dass er ohne Werkzeug, also rein von Hand, vom Anwender gewechselt werden kann.

Der Werkzeugkopf muss in der Werkzeugaufnahme sicher aufgenommen sein, um Fehlfunktionen der Maschine zu vermeiden. Zu diesem Zweck ist ein mechanisches Sicherungselement vorgesehen, welches den Werkzeugkopf in der Werkzeugaufnahme sichert. Dieses kann von einer offenen Position, die ein Einsetzen des Werkzeugkopfs in die Aufnahme erlaubt, in eine geschlossene Position bewegt werden, in der der Werkzeugkopf in der Werkzeugaufnahme gesichert ist. Werkzeugkopf und Werkzeugaufnahme sind derart eingerichtet, dass das Sicherungselement nur dann in die zweite Position bewegt werden kann, wenn der Werkzeugkopf korrekt eingesetzt ist. Wenn das Sicherungselement beispielsweise ein Bolzen ist, so kann dieser nur in seinen Sitz eingesetzt und von der offenen in die geschlossene Position bewegt werden, wenn der Werkzeugkopf vollständig und richtig in der Aufnahme gehalten ist.

Das mechanische Betätigungselement ist dazu eingerichtet, mit dem Sicherungselement zu interagieren. Dabei wird es insbesondere von dem Sicherungselement in eine bestimmte (zweite) Position gezwängt, wenn das Sicherungselement in seine geschlossene Position bewegt wird. Dabei kann die Bewegung des Betätigungselements durch das Sicherungselement bereits beginnen, wenn das Sicherungselement von der offenen in die geschlossene Position bewegt wird, also bevor es diese endgültig erreicht hat. Jedenfalls wenn das Sicherungselement in der geschlossenen Position ist, zwingt es das Betätigungselement, vorzugsweise direkt auf mechanische Weise, in eine bestimmte, zweite Position. Diese Bewegung des Betätigungselements von der ersten in die zweite Position kann durch geeignete Mittel, die weiter unten noch beschrieben werden, detektiert werden, wodurch es möglich ist, festzustellen, ob der Werkzeugkopf in der Werkzeugaufnahme gesichert ist. Diese Kenntnis kann dann dazu genutzt werden, die Pressmaschine für einen Pressvorgang freizugeben. Wenn das mechanische Sicherungselement nicht in der geschlossenen Position ist, so zwingt es auch nicht das Betätigungselement in dessen zweite Position, und eine Freigabe der Pressmaschine für einen Pressvorgang kann unterbunden werden. Damit ist es nur dann möglich die Pressmaschine zu betätigen, wenn das Sicherungselement in seiner geschlossenen Position ist. Dies kann beispielsweise auch dann der Fall sein, wenn kein Werkzeugkopf in der Werkzeugaufnahme eingesetzt ist. Wesentlich ist vielmehr, dass, wenn ein Werkzeugkopf eingesetzt ist, dieser vollständig und richtig eingesetzt ist, bevor eine Freigabe der Pressmaschine für einen Pressvorgang erfolgt.

Vorzugsweise ermöglicht das Betätigungselement in seiner zweiten Position eine Freigabe der Pressmaschine für einen Pressvorgang. Die Freigabe der Pressmaschine kann dabei direkt oder indirekt durch das Betätigungselement erfolgen, indem dieses beispielsweise einen Sensor oder Schalter oder Ähnliches betätigt. Auf diese Weise ist sichergestellt, dass kein Pressvorgang ausgelöst werden kann, wenn das Sicherungselement nicht in seiner geschlossenen Position ist. Da das Sicherungselement nur dann in seine geschlossene Position gebracht werden kann, wenn der Werkzeugkopf richtig in der Werkzeugaufnahme gehalten ist, bzw. wenn kein Werkzeugkopf vorhanden ist, wird somit sichergestellt, dass nicht versehentlich ein Pressvorgang ausgelöst wird, wenn ein Werkzeugkopf nicht richtig eingesetzt ist. Bei einem nicht richtig eingesetzten Werkzeugkopf kann das Auslösen eines Pressvorganges nämlich zu einer Beschädigung des Werkzeugs, des Werkstücks oder auch zu Verletzungen des Anwenders führen.

Vorzugsweise ist das Gehäuse der Pressmaschine mit einem Sensor versehen, der bei Auslösung die Freigabe bewirkt, wobei das Betätigungselement in seiner zweiten Position den Sensor auslöst. Der Begriff Sensor wird hierin in seiner breitestmöglichen Bedeutung verstanden und kann jegliche Art von Bauteilen umfassen, welche mit dem Betätigungselement interagieren können, um eine Aktion zu bewirken, die die Freigabe der Pressmaschine für einen Pressvorgang bewirkt. Beispielsweise kann der Sensor ein optischer Schalter sein, der erfasst, wenn das Betätigungselement in seiner zweiten Position ist. Diese Erfassung kann dann dazu benutzt werden, einer Steuerung der Pressmaschine ein entsprechendes Signal zu übermitteln, so dass diese eine Freigabe der Maschine für einen Pressvorgang erlaubt. Auf diese Weise wird vorteilhaft sichergestellt, dass nur wenn das Betätigungselement in seiner zweiten Position ist, und damit das Sicherungselement in seiner geschlossenen Position, ein Pressvorgang ausgelöst werden kann. Während das Betätigungselement an der (vorzugweise drehbaren) Werkzeugaufnahme eingerichtet ist, ist der Sensor am Gehäuse vorgesehen bzw. angeordnet. Auf diese Weise ist es möglich, auf eine feste Verkabelung von der Werkzeugaufnahme zum Gehäuse zu verzichten, wie es der Fall sein muss, wenn der Sensor an der Werkzeugaufnahme angeordnet ist.

Die Werkzeugaufnahme ist am Gehäuse der Pressmaschine drehbar eingerichtet und zwar vorzugsweise uneingeschränkt frei drehbar. Für viele praktische Anwendungen ist es wünschenswert, dass die Werkzeugaufnahme, und damit der Werkzeugkopf, im Verhältnis zum Gehäuse der Pressmaschine drehbar gehalten ist. Beispielsweise ist in vielen Anwendungssituationen der Platz zur Positionierung der Pressmaschine durch den Anwender beschränkt. Wenn beispielsweise Rohrverbindungen entlang einer Wand hergestellt werden sollen, ist es oft nicht möglich, die Pressmaschine frei einzusetzen, sondern nur in einer bestimmten Ausrichtung. Bei einem starren Werkzeugkopf kann dies dazu führen, dass bestimmte Rohrverbindungen nicht hergestellt werden können. Eine uneingeschränkt frei drehbare Anordnung der Werkzeugaufnahme relativ zum Gehäuse der Pressmaschine erlaubt beispielsweise eine 360° Drehung der Werkzeugaufnahme, und des darin befindlichen Werkzeugkopfs, in beide möglichen Drehrichtungen. Dies bietet vorteilhaft eine besonders hohe Flexibilität der Handhabung der Maschine. Aus dem Stand der Technik waren elektronische Betätigungselemente bekannt, die erfasst haben, ob das Sicherungselement in seiner geschlossenen Position ist. Diese elektronischen Betätigungselemente verwenden einen Sensor, der die Position des Sicherungselements erkennt und Signalleitungen, mit denen die Signale des Sensors zur Steuerung der Pressmaschine geleitet werden. Hierzu ist es notwendig, dass die Signalleitungen von der Werkzeugaufnahme zum Gehäuse der Pressmaschine geführt werden, in dem sich die Steuerung der Pressmaschine befindet. Derartige Konstruktionen haben den großen Nachteil, dass eine Drehbarkeit der Werkzeugaufnahme relativ zum Gehäuse der Pressmaschine aufgrund der Signalleitungen, die sich von der Werkzeugaufnahme bis zum Gehäuse erstrecken, behindert wird. Eine Drehung der Werkzeugaufnahme bewirkt immer auch eine Mitbewegung der Signalleitungen, so dass diese, aufgrund der häufig auftretenden Belastung, eine Schwachstelle in der Konzeption darstellen. Bei derartigen Geräten aus dem Stand der Technik kommt es daher regelmäßig vor, dass die Signalleitungen beschädigt oder abgetrennt werden, wenn die Werkzeugaufnahme relativ zum Gehäuse der Pressmaschine gedreht wird. Insbesondere ist es mit derartigen Lösungen nicht möglich, eine frei drehbare Werkzeugaufnahme einzurichten. Die Lösungen nach dem Stand der Technik erlauben daher in der Regel nur eine beschränkte Drehbarkeit, um beispielsweise 90° oder weniger in jede Drehrichtung. Die vorliegende Erfindung erlaubt es nunmehr, dass das Betätigungselement mit der Werkzeugaufnahme mitgedreht werden kann, da es nicht länger notwendig ist, das Betätigungselement fest mit dem Gehäuse der Pressmaschine zu verbinden, wie dies beispielsweise bei Signalleitungen (Kabel) zwingend der Fall ist, da diese notwendigerweise von der Werkzeugaufnahme bis zum Gehäuse verlaufen müssen. Anders gesagt erlaubt es die vorliegende Erfindung das Betätigungselement nur an der Werkzeugaufnahme mechanisch zu befestigen, ohne dass dieses in irgendeiner Weise fest mit dem Gehäuse bzw. dem Grundkörper der Pressmaschine verbunden werden muss.

Die Werkzeugaufnahme ist relativ zum Gehäuse der Pressmaschine drehbar eingerichtet und zwar vorzugsweise uneingeschränkt frei drehbar. Vorzugsweise ist die Werkzeugaufnahme am Gehäuse der Pressmaschine über ein Drehgelenk gekoppelt. Das Betätigungselement verfügt zudem vorzugsweise über ein Ringelement, welches die Werkzeugaufnahme umschließt und das Ringelement ist derart angeordnet, dass es eine Auslösung des Sensors bewirkt, wenn das Betätigungselement in seiner zweiten Position ist. Die Werkzeugaufnahme und damit das daran befestigte Betätigungselement sind relativ zum Gehäuse der Pressmaschine drehbar und das Ringelement umschließt die Werkzeugaufnahme vorzugsweise vollständig, d.h. es ist ein durchgängiger Ring, der die Werkzeugaufnahme um 360° umschließt. Es ist jedoch ebenfalls denkbar, dass das Ringelement die Werkzeugaufnahme nur teilweise umschließt oder aus mehreren Elementen aufgebaut ist. Wesentlich ist vielmehr, dass es das Ringelement erlaubt, dass unabhängig von der Ausrichtung der Werkzeugaufnahme, und damit des Betätigungselements, relativ zur Pressmaschine eine Auslösung eines Sensors möglich ist. Die Verwendung eines derartigen umlaufenden Ringelements erlaubt es beispielsweise, dass nur ein oder zwei Sensoren am Gehäuse der Pressmaschine vorgesehen sein müssen, da das Ringelement eine Betätigung dieser Sensoren erlaubt, unabhängig von der Drehorientierung der Werkzeugaufnahme bzw. des Betätigungselements.

Vorzugsweise umfasst das Betätigungselement einen Stab, der sich von der geschlossenen Position des Sicherungselements entlang der Werkzeugaufnahme bis zum Drehgelenk erstreckt. Ein Ende des Stabs befindet sich dann beispielsweise an bzw. in der Nähe der geschlossenen Position des Sicherungselements, so dass es mit dem Sicherungselement interagieren kann. Das andere Ende des Stabs ist in der Nähe des Drehgelenks, und erlaubt somit eine Auslösung bzw. Betätigung eines am Gehäuse der Pressmaschine vorgesehenen Sensors, der sich zu diesem Zweck vorzugsweise ebenfalls nahe des Drehgelenks befinden sollte. Ein Stab stellt eine robuste und zuverlässige mechanische Lösung dar, die auch im harten Alltagseinsatz der Pressmaschine zuverlässig und dauerhaft arbeitet.

Vorzugsweise ist das Gehäuse der Pressmaschine mit einem Sensor versehen bzw. am Gehäuse angeordnet, der bei Betätigung bzw. Auslösung eine Freigabe der Maschine bewirkt, und das Betätigungselement ist derart eingerichtet, dass es diesen Sensor betätigt, wenn das Betätigungselement in seiner zweiten Position ist. Dabei muss das Betätigungselement den Sensor nicht notwendigerweise direkt betätigen, sondern jegliche Form von indirekter Betätigung ist ebenso denkbar.

Vorzugsweise ist am Gehäuse der Pressmaschine (mindestens) ein Sensor vorgesehen, der bei Auslösung die Freigabe bewirkt, und wobei das Betätigungselement in seiner zweiten Position den Sensor auslöst und der Sensor ein mechanischer Schalter, ein optischer Sensor oder ein kapazitiver Sensor ist. Ein optischer Sensor kann beispielsweise die Position des Betätigungselements erfassen und feststellen, wann dieses in seiner zweiten Position ist. Diese Erfassung kann ein Signal auslösen, welches beispielsweise an die Steuerung der Pressmaschine geleitet wird, um eine Freigabe der Pressmaschine für einen Pressvorgang zu bewirken. Besonders bevorzugt ist der Sensor ein mechanischer Schalter. Diese Lösung ist besonders robust und wenig fehleranfällig. Das Betätigungselement löst diesen mechanischen Schalter aus, wenn es in seiner zweiten Position ist, indem es beispielsweise mechanisch direkt mit diesem interagiert. Insbesondere im Zusammenhang mit dem oben erwähnten Ringelement des Betätigungselements ist es somit möglich, dass ein einziger Schalter, der am Gehäuse fest eingerichtet ist, genügt, da mittels des Ringelements eine Betätigung dieses einen Schalters möglich ist, unabhängig davon, in welcher Drehorientierung die Werkzeugaufnahme und das daran gehaltene Befestigungselement im Verhältnis zum Gehäuse angeordnet ist. Grundsätzlich ist es natürlich ebenso möglich mehr als einen Sensor und mehr als ein Betätigungselement oder mehr als ein Sicherungselement zu verwenden, wenn dies gewünscht ist. Hierdurch erhöht sich lediglich der konstruktive Aufwand, ohne das vom Gedanken der Erfindung abgewichen wird.

Weiter vorzugsweise ist der Sensor ein mechanischer Schalter, der mit einem beweglichen Federarm versehen ist, an dessen freiem Ende ein drehbares Rad angeordnet ist, welches Rad mit dem Betätigungselement in Eingriff ist, wenn das Betätigungselement in der zweiten Position ist. Das Rad erlaubt zum einen eine verschleißfreie Betätigung des Schalters auch bei sehr häufigen Betätigungsvorgängen. Zudem ist ein derartiges Rad besonders vorteilhaft, wenn das Betätigungselement über ein Ringelement verfügt, welches die Werkzeugaufnahme umschließt, um eine Betätigung des Schalters unabhängig von der Drehorientierung der Werkzeugaufnahme zu erlauben. Beispielsweise kann das drehbare Rad ständig in Kontakt mit einem derartigen Ringelement sein, unabhängig von der Position des Betätigungselements. Erst wenn das Betätigungselement in seine zweite Position gezwungen wird, wird der Schalter ausgelöst. Eine derartige Lösung ist besonders verschleißfrei und sorgt für eine hohe Lebensdauer der Sicherungseinrichtung.

Vorzugsweise ist das Betätigungselement in die erste Position vorgespannt, wie insbesondere mittels eines Federelements. Wenn keine äußeren Kräfte auf das Betätigungselement wirken, ist dieses somit immer in seiner ersten Position. Erst bei Bewegung des Sicherungselements in dessen geschlossene Position kommt es zu einer Interaktion mit dem Betätigungselement und dieses wird gegen die Kraft des Vorspannmittels in seine zweite Position bewegt. Auf diese Weise wird vorteilhaft sichergestellt, dass eine Freigabe der Maschine nicht versehentlich erfolgt, weil das Betätigungselement versehentlich in seine zweite Position bewegt wird, ohne dass das Sicherungselement in seiner geschlossenen Position ist.

Vorzugsweise ist die Werkzeugaufnahme gabelförmig ausgebildet. Eine gabelförmige Ausbildung erlaubt eine besonders sichere Führung und Befestigung des Werkzeugkopfs, der typischerweise zwischen den beiden Gabelspitzen eingesetzt wird. Das Sicherungselement ist vorzugsweise ein Bolzen, insbesondere, wenn die Werkzeugaufnahme gabelförmig ausgebildet ist. Ein Bolzen kann den Werkzeugkopf sicher mit der Werkzeugaufnahme verbinden und robust genug ausgestaltet sein, um das mechanische Betätigungselement in die zweite Position zu zwingen, wenn der Bolzen in seine geschlossene Position bewegt wird bzw. in seiner geschlossenen Position ist.

Vorzugsweise verfügt die gabelförmige Werkzeugaufnahme über zwei gegenüberliegende Öffnungen, und der Bolzen ist in diesen geführt. Der Bolzen erstreckt sich also, wenn er in seiner geschlossenen Position ist, von einer Gabelspitze zur anderen und kann somit den Werkzeugkopf innerhalb der Gabel sichern. Dies ist eine robuste und konstruktiv einfache Möglichkeit, um einen Werkzeugkopf sicher zu halten und eine Interaktion mit dem mechanischen Betätigungselement sicherzustellen, wenn das Sicherungselement in seiner geschlossenen Position ist.

Die Pressmaschine ist eine elektrohydraulische Pressmaschine, wobei ein Hydraulikkolben den Werkzeugkopf betätigt. Die Betätigung des Werkzeugkopfs kann dabei direkt oder indirekt über den Hydraulikkolben erreicht werden. Am Betätigungsende des Hydraulikkolbens ist ein Rollenmechanismus vorgesehen, der mit entsprechend ausgebildeten Betätigungsflächen des Werkzeugkopfs interagiert und eine Bewegung der Werkzeuge des Werkzeugkopfs erlaubt, wenn der Hydraulikkolben vorwärtsbewegt wird.

Grundsätzlich ist es bevorzugt, dass die Pressmaschine über eine Pressmaschinensteuerung verfügt, die eine Freigabe der Pressmaschine für einen Pressvorgang bewirkt, wenn das Betätigungselement in seiner zweiten Position ist. Dies kann beispielsweise dadurch erfolgen, dass das Betätigungselement in seiner zweiten Position, wie oben beschrieben, einen Sensor betätigt bzw. auslöst, der wiederum mit der Pressmaschinensteuerung verbunden ist, um der Steuerung ein entsprechendes Signal zu liefern. Diese Konstruktion hat den Vorteil, dass die Pressmaschinensteuerung und der Sensor beide an oder in dem Gehäuse der Pressmaschine vorgesehen sein können, wohingegen das Betätigungselement beweglich an der Werkzeugaufnahme eingerichtet ist, die wiederum drehbar gegenüber dem Gehäuse der Pressmaschine angeordnet ist. Auf diese Weise kann sich das Betätigungselement mit der Werkzeugaufnahme mitdrehen, wohingegen der Sensor relativ zum Gehäuse und damit relativ zur Pressmaschinensteuerung unbeweglich ist. Eine Signalverkabelung zwischen Sensor und Steuerung ist somit einfach zu realisieren, da beide Elemente in einer festen Anordnung zueinander stehen. Damit kann vorteilhaft eine einfache Drehbarkeit der Werkzeugaufnahme relativ zum Gehäuse der Pressmaschine erreicht werden, und zwar insbesondere eine freie Drehbarkeit in beliebige Drehrichtungen und um beliebige Winkelgrade.

### 4. Ausführungsbeispiele

Im Folgenden wird die Erfindung unter Bezugnahme auf die beigefügten Figuren genauer erläutert. Hierbei zeigt:
Figur 1 eine Pressmaschine zum plastischen Verformung eines Werkstücks;
Figur 2 die Pressmaschine von Figur 1, wobei das Sicherungselement in der offenen Position gezeigt ist;
Figur 3 die Pressmaschine nach Figur 1 mit einem eingesetzten und gesicherten Werkzeugkopf;
Figur 4 eine Detailansicht der Werkzeugaufnahme der Pressmaschine von Figur 1;
Figur 5 eine weitere Detailansicht der Werkzeugaufnahme mit einem erfindungsgemäßen Betätigungselement;
Figur 6 eine Detailansicht der Figur 4, wenn das Betätigungselement in einer ersten Position ist; und
Figur 7 eine Detailansicht der Figur 4, wenn das Betätigungselement in einer zweiten Position ist und einen Sensor auslöst.

Im Folgenden wird eine bevorzugte Ausführungsform der vorliegenden Erfindung mit Bezug auf die beigefügten Figuren im Detail beschrieben.

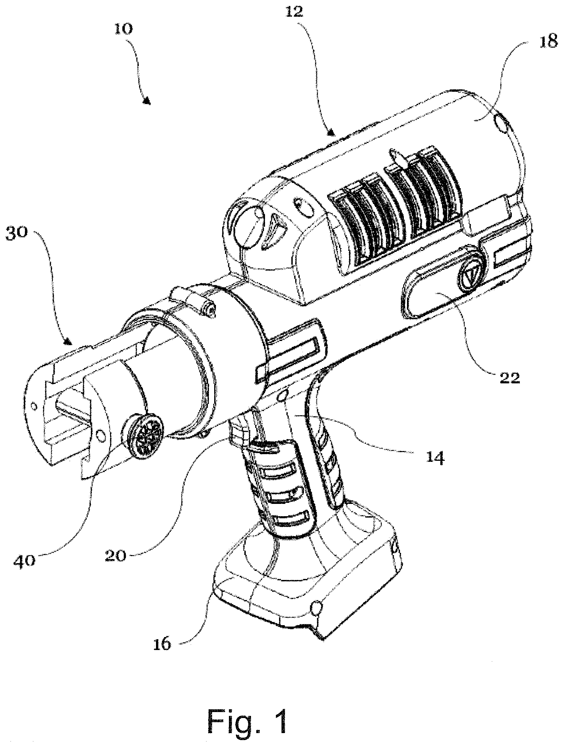

Die Figur 1 zeigt eine Ausführungsform einer Pressmaschine 10. Die Pressmaschine 10 ist ein elektrohydraulisch betriebenes Handpressgerät. Zu diesem Zweck weist sie einen Handgriff 14 auf ("Pistolengriff"), sowie einen Auslöser 20, so dass das Gerät mit einer Hand bedient werden kann. Am Ende des Handgriffs 14 ist eine Aufnahme 16 für einen Akkumulator (nicht gezeigt) vorgesehen. Dies erlaubt einen kabellosen Betrieb der Pressmaschine 10. Die Pressmaschine 10 verfügt über ein Gehäuse 12, welches die funktionalen Bauteile umschließt und schützt. Am Gehäuse 12 ist eine drehbar bewegliche Werkzeugaufnahme 30 vorgesehen, die zur Aufnahme eines auswechselbaren Werkzeugkopfes eingerichtet ist. Die Werkzeugaufnahme 30 ist gabelförmig ausgebildet und erlaubt die Aufnahme eines Werkzeugkopfs zwischen den beiden Gabelenden bzw. Gabelspitzen. Zur Sicherung des Werkzeugkopfs in der Werkzeugaufnahme 30 ist ein Sicherungselement 40 in Form eines Bolzens vorgesehen. Das Gehäuse 12 enthält auch einen Elektromotor, der mit Bezugszeichen 18 angedeutet ist, sowie eine Steuereinrichtung 22, die den Betrieb der Maschine steuert. Die Steuereinrichtung 22 ist insbesondere mit dem Auslöser 20 verbunden, so dass eine Betätigung des Auslösers 20 einen Pressvorgang auslösen kann.

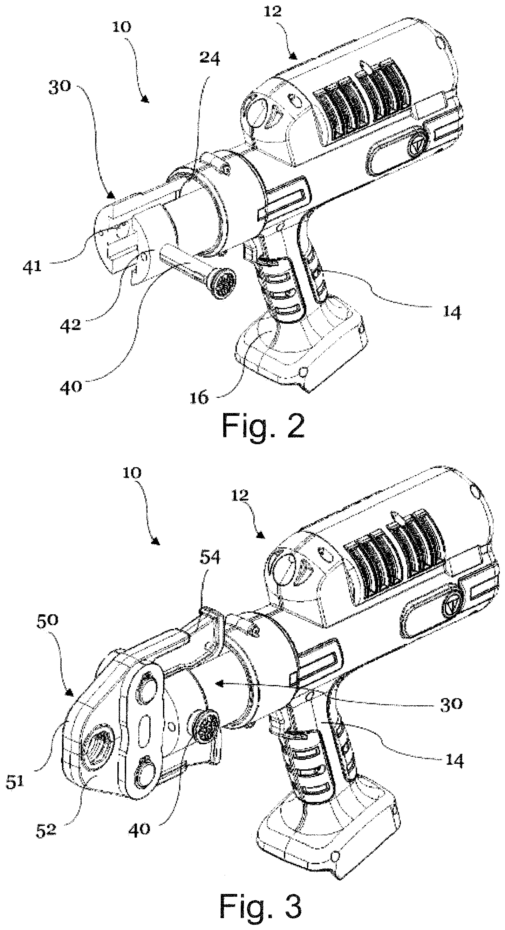

Figur 2 zeigt die Pressmaschine 10 der Figur 1, wenn das Sicherungselement 40 in einer offenen Position ist. In der offenen Position ist der Spalt zwischen den beiden Gabelenden der Werkzeugaufnahme 30 bereit zum Einsetzen eines Werkzeugkopfs. Aus den Figuren 1 und 2 kann man gut erkennen, wie das Sicherungselement 40 in zwei gegenüberliegenden Öffnungen 41, 42 der gabelförmigen Werkzeugaufnahme 40 geführt ist.

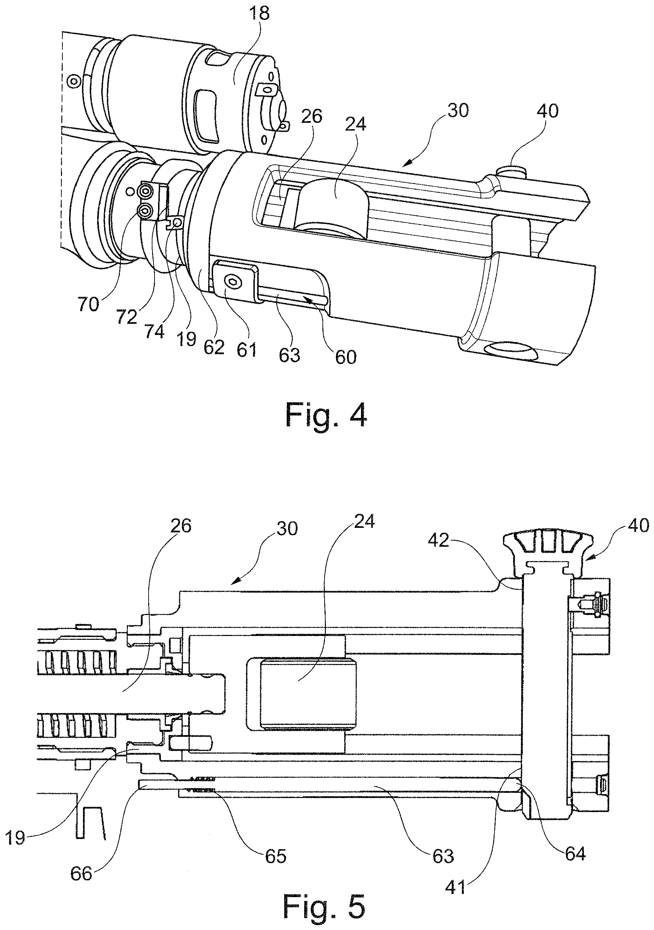

Figur 3 zeigt die Pressmaschine mit einem eingesetzten und gesicherten Werkzeugkopf 50. Der Werkzeugkopf 50 umfasst zwei bewegliche Klemmbacken 51 und 52, zwischen denen ein Fitting zur Verbindung von Rohren eingesetzt und verpresst werden kann. Das Sicherungselement 40 ist in der geschlossenen Position gezeigt und sichert den Werkzeugkopf 50 in der Werkzeugaufnahme 30. Bei Auslösung eines Pressvorgangs treibt der Elektromotor 18 eine Hydraulikpumpe an (nicht gezeigt), die wiederum einen Hydraulikkolben 26 vom Gehäuse in Richtung des Sicherungselements 40 vorbewegt (siehe Figur 4). Der Hydraulikkolben 26 ist an seinem freien Ende mit Rollen 24 versehen, die auf Betätigungselemente 54 des Werkzeugkopfs 50 treffen und somit ein Schließen der Klemmbacken 51 und 52 bewirken, wenn der Hydraulikkolben nach vorne bewegt wird.

Zum sicheren Betrieb der Pressmaschine ist es notwendig, dass der Werkzeugkopf 50 sicher in der Werkzeugaufnahme gehalten ist. Zu diesem Zweck kann das Sicherungselement 40 in die geschlossene Position bewegt werden, in der es den Werkzeugkopf in der Aufnahme sichert. Die vorliegende Erfindung stellt weiter ein mechanisches Betätigungselement bereit, welches mit dem Sicherungselement 40 interagieren kann.

Die Funktionsweise des mechanischen Betätigungselements wird im Folgenden unter Bezugnahme auf die Figuren 4 bis 6 erläutert. In Figur 4 ist eine Detailansicht der Werkzeugaufnahme gezeigt, wobei Teile des Gehäuses zur Klarheit entfernt wurden. Das mechanische Betätigungselement 60 umfasst eine Metallstange bzw. Stab 63, die sich von der Bohrung 41 in der Werkzeugaufnahme 30 bis zu einem Drehgelenk 19 erstreckt, mittels dem die Werkzeugaufnahme drehbar an der Pressmaschine bzw. dem Gehäuse der Pressmaschine gelagert ist. Das mechanische Betätigungselement 60 erstreckt sich somit von der zweiten Position des Sicherungselements 40 entlang der Werkzeugaufnahme bis zum Drehgelenk 19. Die Stange bzw. der Stab 63 ist in einer Führung 61 gehalten und an ihrem gehäuseseitigen Ende mit einem Ringelement 62 versehen (siehe Figuren 4, 5 und 6). Das Ringelement 62 umschließt die Werkzeugaufnahme 30 im gezeigten Ausführungsbeispiel vollständig, es kann jedoch auch geteilt ausgebildet sein, mehrstückig oder die Werkzeugaufnahme nur teilweise umschließend. Gehäuseseitig ist ein Sensor in Form eines mechanischen Schalters 70 vorgesehen. Der mechanische Schalter 70 ist gehäuseseitig befestigt und dreht sich bei einer Drehung der Werkzeugaufnahme nicht mit. Der mechanische Schalter verfügt über einen beweglichen Federarm 72, an dessen Ende ein drehbares Rad 74 angeordnet ist. In der in Figur 4 gezeigten Anordnung ist das Sicherungselement 40 in der geschlossenen Position und zwängt das Betätigungselement 60 in die zweite Position. Das Ringelement 62 ist in Kontakt mit den Rad 74 und betätigt in der gezeigten Anordnung den Federarm 72, so dass der Sensor 70 betätigt bzw. ausgelöst wird und ein entsprechendes Signal an die Steuerung der Pressmaschine abgibt.

In Figur 5 ist eine teilgeschnittene Seitenansicht des Details der Figur 4 gezeigt. Man sieht den Hydraulikkolben 26, der mit den Rollen 24 verbunden ist und diese in Richtung des Sicherungselements 40 und damit in Richtung des Werkzeugkopfs vorbewegen kann. Das Sicherungselement 40 ist in der geschlossenen Position gezeigt, wobei in Figur 5 kein Werkzeugkopf eingesetzt ist. Die Stange 63 des Betätigungselements 60 ist durch das Sicherungselement 40 in die zweite Position bewegt worden. Der Doppelpfeil in Figur 5 deutet an, wie die Stange 63 beweglich an der Werkzeugaufnahme eingerichtet ist und somit zwischen zwei Positionen bewegt werden kann. Ein Federelement 65 spannt die Stange 63 in die erste Position vor. In dieser ersten Position erstreckt sich die Spitze 64 der Stange 63 teilweise in die Öffnung 42 zur Aufnahme des Sicherungselements 40. Beim Einführen des Sicherungselements 40 in die Öffnung 42, d.h. beim Bewegen des Sicherungselements in die geschlossene Position, drückt dieses mechanisch die Stange 63 nach links in Figur 5 gegen die Kraft des Federelements 65. Dabei wird das Ende 66 der Stange 63 in Richtung des Gehäuses bewegt. Das in Figur 5 nicht abgebildete Ringelement 62 ist fest mit dem Ende 66 der Stange 63 verbunden und wird somit ebenfalls in Richtung des Gehäuses bewegt. Der am Gehäuse vorgesehene Sensor in Form des mechanischen Schalters 70 wird durch diese Bewegung aktiviert bzw. ausgelöst und sendet ein entsprechendes Signal an die Steuerung der Pressmaschine. Das Signal zeigt an, dass das Sicherungselement 40 in der geschlossenen Position ist und somit die Pressmaschine gefahrlos freigegeben werden kann. Dem Fachmann ist klar, dass anstelle des mechanischen Schalters auch andere Arten von Sensoren verwendet werden können, mit denen eine Detektion der Bewegung bzw. Position des Betätigungselements 60 möglich ist.

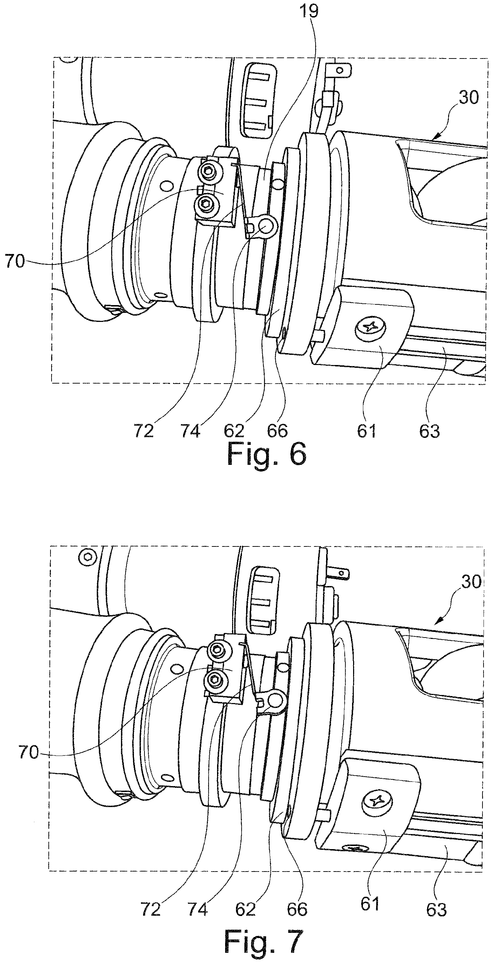

Die Figuren 6 und 7 zeigen erneut Detailansichten und insbesondere das Zusammenwirken des Betätigungselements 60 mit dem mechanischen Schalter 70. In Figur 6 befindet sich das Betätigungselement in der ersten Position, d.h. der Bolzen ist nicht in der geschlossenen Position. In der in Figur 7 gezeigten Anordnung ist der Bolzen bzw. das Sicherungselement in die geschlossene Position verbracht und zwängt die Stange 63 in Richtung des Gehäuses und damit das Ringelement 62 gegen das Rad 74 des Federarms 72 und betätigt dabei den Schalter 70.

### Bezugszeichenliste:

10 Pressmaschine
12 Gehäuse
14 Handgriff
16 Aufnahme für Akku
18 Elektromotor
20 Auslöser
22 Steuereinrichtung
24 Rollen
23 Hydraulikkolben
30 Werkzeugaufnahme
40 Sicherungselement (Bolzen)
41, 42 Öffnungen
50 Werkzeugkopf
51, 52 Klemmbacken
54 Betätigungsflügel
60 Betätigungselement
61 Führung
62 Ringelement
63 Stange
64 Spitze der Stange
65 Federelement
66 Ende der Stange
70 mechanischer Schalter (Sensor)
72 Federarm
74 Rad
19 Drehgelenk

## Patentansprüche

1. Eine Pressmaschine (10) zum plastischen Verformen eines Werkstücks, aufweisend:
a. ein Gehäuse (12) und einen Elektromotor (18) zur Betätigung der Pressmaschine;
b. eine Werkzeugaufnahme (30) die am Gehäuse (12) zur Aufnahme eines auswechselbaren Werkzeugkopfs (50) der Pressmaschine (10) eingerichtet ist;
c. ein mechanisches Sicherungselement (40), welches von einer offenen Position, in der ein Werkzeugkopf (50) in die Werkzeugaufnahme (30) eingesetzt werden kann, in eine geschlossene Position, in der der Werkzeugkopf (50) in der Werkzeugaufnahme (30) gesichert ist, beweglich eingerichtet ist, **dadurch gekennzeichnet, dass** die Werkzeugaufnahme (30) am Gehäuse (12) der Pressmaschine (10) drehbar eingerichtet ist und zwar vorzugsweise uneingeschränkt frei drehbar und die Pressmaschine (10) eine elektrohydraulische Pressmaschine ist, wobei ein Hydraulikkolben den Werkzeugkopf betätigt und am Betätigungsende des Hydraulikkolbens ein Rollenmechanismus vorgesehen ist, der mit entsprechend ausgebildeten Betätigungsflächen des Werkzeugkopfs interagieren kann und eine Bewegung der Werkzeuge des Werkzeugkopfs erlaubt, wenn der Hydraulikkolben vorwärtsbewegt wird, und
d. wobei ein mechanisches Betätigungselement (60) vorgesehen ist, welches an der Werkzeugaufnahme (30) zwischen einer ersten Position und einer zweiten Position beweglich eingerichtet ist, wobei das Betätigungselement (60) derart angeordnet ist, dass es mit dem mechanischen Sicherungselement (40) interagieren kann, so dass das Sicherungselement (40) in seiner geschlossenen Position das Betätigungselement (60) in die zweite Position zwingt.

2. Die Pressmaschine (10) zum plastischen Verformen eines Werkstücks nach Anspruch 1, **dadurch gekennzeichnet, dass** das Betätigungselement (60) in seiner zweiten Position eine Freigabe der Pressmaschine (10) für einen Pressvorgang ermöglicht.

3. Die Pressmaschine (10) zum plastischen Verformen eines Werkstücks nach einem der vorhergehenden Ansprüche 1 oder 2, **dadurch gekennzeichnet, dass** das Gehäuse (12) der Pressmaschine (10) mit mindestens einem Sensor (70) versehen ist, der bei Auslösung die Freigabe bewirkt, und wobei das Betätigungselement (60) in seiner zweiten Position den Sensor (70) auslöst.

4. Die Pressmaschine (10) zum plastischen Verformen eines Werkstücks nach Anspruch 3, **dadurch gekennzeichnet, dass** die Werkzeugaufnahme (30) an dem Gehäuse (12) über ein Drehgelenk (19) gekoppelt ist, wobei das Betätigungselement (60) über ein Ringelement (62) verfügt, welches die Werkzeugaufnahme (30) umschließt, und wobei das Ringelement (62) derart angeordnet ist, dass es eine Auslösung des Sensors (70) bewirkt, wenn das Betätigungselement (60) in seiner zweiten Position ist.

5. Die Pressmaschine (10) zum plastischen Verformen eines Werkstücks nach dem vorhergehenden Anspruch 4, **dadurch gekennzeichnet, dass** das Betätigungselement (60) einen Stab (63) umfasst und sich von der geschlossenen Position des Sicherungselements (40) entlang der Werkzeugaufnahme (30) bis zum Drehgelenk (19) erstreckt.

6. Die Pressmaschine (10) zum plastischen Verformen eines Werkstücks nach einem der vorhergehenden Ansprüche 1 bis 5, **dadurch gekennzeichnet, dass** am Gehäuse der Pressmaschine (10) mindestens ein Sensor (70) vorgesehen ist, der bei Betätigung eine Freigabe der Maschine (10) bewirkt, und wobei das Betätigungselement (60) derart eingerichtet ist, dass es den Sensor (70) betätigt, wenn es in seiner zweiten Position ist.

7. Die Pressmaschine (10) zum plastischen Verformen eines Werkstücks nach einem der vorhergehenden Ansprüche 1 bis 6, **dadurch gekennzeichnet, dass** die Pressmaschine (10) mit einem Sensor (70) versehen ist, der bei Auslösung die Freigabe bewirkt, und wobei das Betätigungselement (60) in seiner zweiten Position den Sensor (70) auslöst und der Sensor (70) ein mechanischer Schalter, ein optischer Sensor oder ein kapazitiver Sensor ist.

8. Die Pressmaschine (10) zum plastischen Verformen eines Werkstücks nach einem der vorhergehenden Ansprüche 3, 4, 5, 6 oder 7, **dadurch gekennzeichnet, dass** der Sensor (70) ein mechanischer Schalter ist, welcher mit einem beweglichen Federarm (72) versehen ist, an dessen freiem Ende ein drehbares Rad (74) angeordnet ist, welches Rad mit dem Betätigungselement (60) in Eingriff ist, wenn das Betätigungselement in der zweiten Position ist.

9. Die Pressmaschine (10) zum plastischen Verformen eines Werkstücks nach einem der vorhergehenden Ansprüche 1 bis 8, **dadurch gekennzeichnet, dass** das Betätigungselement (60) in die erste Position vorgespannt ist, vorzugsweise mittels eines Federelements (65).

10. Die Pressmaschine (10) zum plastischen Verformen eines Werkstücks nach einem der vorhergehenden Ansprüche, **dadurch gekennzeichnet, dass** die Werkzeugaufnahme (30) gabelförmig ausgebildet ist.

11. Die Pressmaschine (10) zum plastischen Verformen eines Werkstücks nach einem der vorhergehenden Ansprüche, **dadurch gekennzeichnet, dass** das Sicherungselement (40) ein Bolzen ist.

12. Die Pressmaschine (10) zum plastischen Verformen eines Werkstücks nach den Ansprüchen 10 und 11, **dadurch gekennzeichnet, dass** der Bolzen in zwei gegenüberliegenden Öffnungen (41, 42) der gabelförmigen Werkzeugaufnahme (30) geführt ist.

13. Die Pressmaschine (10) zum plastischen Verformen eines Werkstücks nach einem der vorhergehenden Ansprüche 1 bis 12, **dadurch gekennzeichnet, dass** die Pressmaschine (10) über eine Pressmaschinensteuerung (22) verfügt, die eine Freigabe der Pressmaschine (10) für einen Pressvorgang bewirkt, wenn das Betätigungselement (60) in seiner zweiten Position ist.

## Claims

1. A pressing machine (10) for plastically deforming a workpiece, comprising:
a. a housing (12) and an electric motor (18) for actuating the pressing machine;
b. a tool holder (30) arranged on the housing (12) for holding an exchangeable tool head (50) of the pressing machine (10);
c. a mechanical securing element (40) which is arranged to be movable from an open position, in which a tool head (50) can be inserted into the tool holder (30), into a closed position, in which the tool head (50) is secured in the tool holder (30), **characterised in that** the tool holder (30) is arranged to be rotatable on the housing (12) of the pressing machine (10), preferably to be freely rotatable without restriction, and
the pressing machine (10) is an electro-hydraulic pressing machine, wherein a hydraulic piston actuates the tool head and a roller mechanism is provided at the actuation end of the hydraulic piston, which can interact with correspondingly formed actuation surfaces of the tool head and allows movement of the tools of the tool head when the hydraulic piston is moved forwards, and
d. wherein a mechanical actuation element (60) is provided, which is arranged to be movable on the tool holder (30) between a first position and a second position, wherein the actuation element (60) is arranged such that it can interact with the mechanical securing element (40), so that the securing element (40) in its closed position forces the actuation element (60) into the second position.

2. The pressing machine (10) for plastically deforming a workpiece according to claim 1, **characterised in that** the actuation element (60) in its second position allows release of the pressing machine (10) for a pressing operation.

3. The pressing machine (10) for plastically deforming a workpiece according to one of the preceding claims 1 or 2, **characterised in that** the housing (12) of the pressing machine (10) is provided with at least one sensor (70), which causes release when triggered, and wherein the actuation element (60) in its second position triggers the sensor (70).

4. The pressing machine (10) for plastically deforming a workpiece according to claim 3, **characterised in that** the tool holder (30) is coupled to the housing (12) via a rotary joint (19), wherein the actuation element (60) has a ring element (62), which surrounds the tool holder (30), and wherein the ring element (62) is arranged such that it causes triggering of the sensor (70) when the actuation element (60) is in its second position.

5. The pressing machine (10) for plastically deforming a workpiece according to the preceding claim 4, **characterised in that** the actuation element (60) comprises a rod (63) and extends from the closed position of the securing element (40) along the tool holder (30) to the rotary joint (19).

6. The pressing machine (10) for plastically deforming a workpiece according to one of the preceding claims 1 to 5, **characterised in that** at least one sensor (70) is provided at the housing of the pressing machine (10), which causes release of the machine (10) when actuated, and wherein the actuation element (60) is arranged such that it actuates the sensor (70) when it is in its second position.

7. The pressing machine (10) for plastically deforming a workpiece according to one of the preceding claims 1 to 6, **characterised in that** the pressing machine (10) is provided with a sensor (70), which causes release when triggered, and wherein the actuation element (60) in its second position triggers the sensor (70) and the sensor (70) is a mechanical switch, an optical sensor or a capacitive sensor.

8. The pressing machine (10) for plastically deforming a workpiece according to one of the preceding claims 3, 4, 5, 6 or 7, **characterised in that** the sensor (70) is a mechanical switch, which is provided with a movable spring arm (72), at the free end of which a rotatable wheel (74) is arranged, which wheel is in engagement with the actuation element (60) when the actuation element is in the second position.

9. The pressing machine (10) for plastically deforming a workpiece according to one of the preceding claims 1 to 8, **characterised in that** the actuation element (60) is biased into the first position, preferably by means of a spring element (65).

10. The pressing machine (10) for plastically deforming a workpiece according to one of the preceding claims, **characterised in that** the tool holder (30) is fork-shaped.

11. The pressing machine (10) for plastically deforming a workpiece according to one of the preceding claims, **characterised in that** the securing element (40) is a bolt.

12. The pressing machine (10) for plastically deforming a workpiece according to claims 10 and 11, **characterised in that** the bolt is guided in two opposite openings (41, 42) of the fork-shaped tool holder (30).

13. The pressing machine (10) for plastically deforming a workpiece according to one of the preceding claims 1 to 12, **characterised in that** the pressing machine (10) has a pressing machine control (22), which causes release of the pressing machine (10) for a pressing operation when the actuation element (60) is in its second position.

## Revendications

1. Une machine de pressage (10) pour la déformation plastique d'une pièce, comprenant :
a. un carter (12) et un moteur électrique (18) pour actionner la machine de pressage ;
b. un moyen de réception d'outil (30) qui est ménagé sur le carter (12) pour recevoir une tête d'outil échangeable (50) de la machine de pressage (10) ;
c. un élément de blocage mécanique (40) qui est conçu de façon déplaçable depuis une position ouverte, dans laquelle une tête d'outil (50) peut être insérée dans le moyen de réception d'outil (30), vers une position fermée dans laquelle la tête d'outil (50) est bloquée dans le moyen de réception d'outil (30), **caractérisée en ce que** le moyen de réception d'outil (30) est monté à rotation sur le carter (12) de la machine de pressage (10), et à savoir préférentiellement à libre rotation illimitée, et
la machine de pressage (10) est une machine de pressage électrohydraulique, dans laquelle un piston hydraulique actionne la tête d'outil et dans laquelle il est prévu à l'extrémité d'actionnement du piston hydraulique un mécanisme à galet qui peut interagir avec des surfaces d'actionnement de conformation correspondante de la tête d'outil et permet un déplacement des outils de la tête d'outil lorsque le piston hydraulique est déplacé vers l'avant, et
d. dans laquelle un élément d'actionnement mécanique (60) est prévu, lequel est agencé sur le moyen de réception d'outil (30) de manière déplaçable entre une première position et une seconde position, l'élément d'actionnement (60) étant disposé de façon qu'il puisse interagir avec l'élément de blocage mécanique (40), de façon que l'élément de blocage (40) dans sa position fermée pousse l'élément d'actionnement (60) dans la seconde position.

2. La machine de pressage (10) pour la déformation plastique d'une pièce selon la revendication 1, **caractérisée en ce que** l'élément d'actionnement (60) permet dans sa seconde position une libération de la machine de pressage (10 pour une opération de pressage.

3. La machine de pressage (10) pour la déformation plastique d'une pièce selon une des revendications précédentes 1 ou 2, **caractérisée en ce que** le carter (12) de la machine de pressage (10) est muni d'au moins un capteur (70) qui, lorsqu'il est déclenché, provoque la libération, et l'élément d'actionnement (60) déclenchant le capteur (70) dans sa seconde position.

4. La machine de pressage (10) pour la déformation plastique d'une pièce selon la revendication 3, **caractérisée en ce que** le moyen de réception d'outil (30) est couplé au carter (12) par l'intermédiaire d'une articulation pivotante (19), l'élément d'actionnement (60) comportant un élément annulaire (62) qui entoure le moyen de réception d'outil (30), et l'élément annulaire (62) étant disposé de façon à provoquer un déclenchement du capteur (70) lorsque l'élément d'actionnement (60) est dans sa seconde position.

5. La machine de pressage (10) pour la déformation plastique d'une pièce selon la revendication précédente 4, **caractérisée en ce que** l'élément d'actionnement (60) comprend une barre (63) et s'étend de la position fermée de l'élément de blocage (40) le long du moyen de réception d'outil (30) jusqu'à l'articulation pivotante (19).

6. La machine de pressage (10) pour la déformation plastique d'une pièce selon une des revendications précédentes 1 à 5, **caractérisée en ce que** sur le carter de la machine de pressage (10) est prévu au moins un capteur (70) qui, lorsqu'il est actionné, provoque une libération de la machine (10), et l'élément d'actionnement (60) étant agencé de façon qu'il actionne le capteur (70) lorsqu'il est dans sa seconde position.

7. La machine de pressage (10) pour la déformation plastique de la pièce selon une des revendications précédentes 1 à 6, **caractérisée en ce que** la machine de pressage (10) est munie d'un capteur (70) qui, lorsqu'il est déclenché, provoque la libération, et l'élément d'actionnement (60) déclenchant le capteur (70) dans sa seconde position, et le capteur (70) étant un interrupteur mécanique, un capteur optique ou un capteur capacitif.

8. La machine de pressage (10) pour la déformation plastique d'une pièce selon une des revendications précédentes 3, 4, 5, 6 ou 7, **caractérisée en ce que** le capteur (70) est un interrupteur mécanique qui est muni d'un bras élastique mobile (72) à l'extrémité libre duquel est disposée une roue tournante (74), laquelle roue est en prise avec l'élément d'actionnement (60) lorsque l'élément d'actionnement est dans la seconde position.

9. La machine de pressage (10) pour la déformation plastique d'une pièce selon une des revendications précédentes 1 à 8, **caractérisée en ce que** l'élément d'actionnement (60) est précontraint dans la première position, préférentiellement au moyen d'un élément élastique (65).

10. La machine de pressage (10) pour la déformation plastique d'une pièce selon une des revendications précédentes, **caractérisée en ce que** le moyen de réception d'outil (30) est conçu avec une forme fourchue.

11. La machine de pressage (10) pour la déformation plastique d'une pièce selon une des revendications précédentes, **caractérisée en ce que** l'élément de blocage (40) est un goujon.

12. La machine de pressage (10) pour la déformation plastique d'une pièce selon les revendications 10 et 11, **caractérisée en ce que** le goujon est guidé dans deux ouvertures opposées (41, 42) du moyen de réception d'outil fourchu (30).

13. La machine de pressage (10) pour la déformation plastique d'une pièce selon une des revendications précédentes 1 à 12, **caractérisée en ce que** la machine de pressage (10) comporte une commande de machine de pressage (22) qui provoque une libération de la machine de pressage (10) pour une opération de pressage lorsque l'élément d'actionnement (60) est dans sa seconde position.
